# EUROPÄISCHE PATENTSCHRIFT

(11) **EP 0 562 593 B1**
(45) Veröffentlichungstag und Bekanntmachung des Hinweises auf die Patenterteilung: **11.06.1997**
(21) Anmeldenummer: 93104925.8
(22) Anmeldetag: 25.03.1993
(51) Int. Cl.: B21D 53/28, B60N 2/22

(54) **Verfahren zur Herstellung von Zahnscheiben für eine Autositz-Verstellung**
Method of making a toothed disc for adjusting a vehicle seat
Procédé de fabrication d'un disque dentée pour le réglage d'un siège automobile

(30) Priorität: 26.03.1992 CH 965/92
(43) Veröffentlichungstag der Anmeldung: 29.09.1993
(73) Patentinhaber: SCHMID HOLDING AG, 8640 Rapperswil (CH)
(72) Erfinder: Bernet, Alois, CH-8645 Jona (CH)
(74) Vertreter: Petschner, Goetz

(56) Entgegenhaltungen:
- EP-A- 0 064 624
- DE-A- 2 807 516
- US-A- 2 072 308
- US-A- 4 254 540

## Beschreibung

Die vorliegende Erfindung betrifft ein Verfahren zur Herstellung von Zahnscheiben für eine Autositz-Verstellvorrichtung, entsprechend dem Oberbegriff des Anspruchs 1 (EP-A-0 064 624).

Autositz-Verstellvorrichtungen sowohl auf der linken Seite als auch auf der rechten Seite eines Autositzes umfassen zwei voneinander unabhängige Blechprofile, von denen das eine mit dem Sitz resp. Chassis und das andere mit der verstellbaren Rückenlehne fest verbunden ist, wobei die Blechprofile über zusammenwirkende, gegeneinander verstellbare Zahnscheiben auf einem Exzenterbolzen abgestützt und mittels einer motorisch oder von Hand antreibbaren Welle relativ zueinander zur Verstellung der Rückenlehne verstellbar sind. Hierfür umfassen die Zahnscheiben, ähnlich einem Planetengetriebe, ein sogenanntes Ritzel und ein sogenanntes Hohlrad mit unterschiedlichen Zähnezahlen, sodass der Exzenterbolzen eine radial-achsiale Verstellung der Zahnscheiben bewirkt.

Ein grosses Problem bei solchen Anordnungen besteht in der Forderung nach höchster Festigkeit an den Kräfte übertragenden Teilen, welcher Forderung ein sehr beschränktes Raumvolumen gegenübersteht, abgesehen von der Notwendigkeit einer rationellen, kostengünstigen Herstellung. Somit ist es nicht möglich, zur Verstärkung der Drehmoment übertragenden Zahnanbindung an der Zahnscheibe, welche hier die wesentlichste Schwachstelle darstellt, einfach dickere Zahnscheiben zu verwenden.

Es ist somit Aufgabe der vorliegenden Erindung, ein Verfahren zu schaffen, welches eine rationelle und kostengünstige Herstellung von Ritzel und Hohlrad derart gestattet, dass sich die Zahnanbindung ohne grössere Dicke der Zahnscheiben wesentlich verstärken und damit die Crash - Festigkeit erheblich verbessern lässt.

Dies wird erfindungsgemäss durch die Merkmale des Anspruchs 1 erreicht.

Um dabei einen unerwünschten Materialschub zu verhindern und für die nachfolgenden Verfahrensschritte eine optimale Positionierung zu gewährleisten, ist es von erheblichem Vorteil, wenn in einer ersten Arbeitsfolge ein Vorschnitt der Nabe resp. Nabenbohrung, ein Freischnitt im Materialstreifen für den nachfolgenden Material-Aufzug sowie ein Vorschnitt oder eine Ausformung eines Sucher-Loches resp. Sucher-Nockens erfolgt.

Ein weiterer Vorteil ergibt sich zudem, wenn das vorgezogene Material sowohl für die Zahnhöhe als auch für die Nabenhöhe zurückverformt wird.

Weiter ist es zweckmässig, wenn während des Zurückverformens des Materials gleichzeitig die Zahnkopfform um mindestens 1/3 der Materialstreifendicke auf den Kopfkreis- bzw.

Fusskreis-Durchmesser angedrückt wird, um beim Feinschneiden der Zahnform einen minimalen Einzug zu gewährleisten.

Zudem kann es zweckmässig sein, wenn die Zahnform während des Werkstoff-Durchsatzes feingeschnitten und gleichzeitig die Nabenbohrung gestanzt wird.

Vorteilhaft ist es ferner, wenn sowohl beim Feinschneiden als auch beim Ausschneiden der Zahnscheiben eine, einen Materialfluss verhindernte Abstützung erfolgt.

Eine beispielsweise Ausführungsform des Erfindungsgegenstandes ist nachfolgend anhand der Zeichnung näher erläutert. Es zeigen:
- Fig. 1: im Querschnitt, in einer Teilansicht, eine Autositz-Verstellvorrichtung mit nach dem erfindungsgemässen Verfahren hergestellten Zahnscheiben; und
- Fig. 2 und 3: in Draufsicht und Längsschnitt einen Material-Streifen in mehreren Folgeschritten zur Veranschaulichung der erfindungsgemässen Verfahrensschritte zur Herstellung einer Zahnscheibe, insbesondere Ritzel.

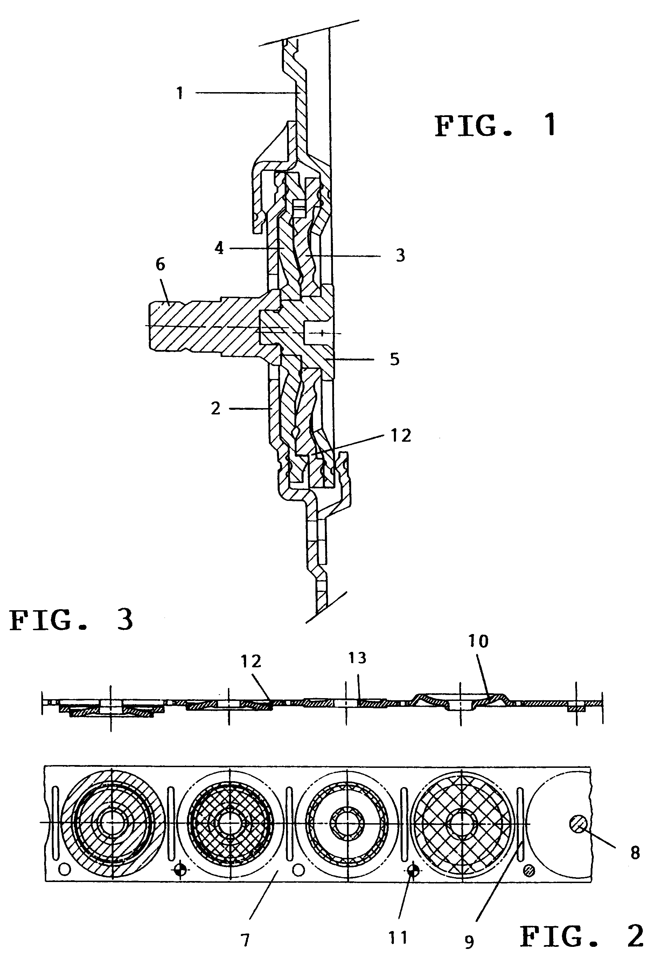

Fig. 1 zeigt zunächst ausschnittweise eine Autositz-Verstellvorrichtung, beispielsweise rechtsseitig eines nicht näher dargestellten Autositzes. Diese Verstellvorrichtung umfasst zwei voneinander unabhängige Blechprofile 1 und 2, von denen das eine mit einem Sitz resp. Chassis (nicht gezeigt) und das andere mit einer verstellbaren Rückenlehne (nicht gezeigt) fest verbunden ist, wobei die Blechprofile über zusammenwirkende, gegeneinander verstellbare Zahnscheiben 3 und 4 auf einem Exzenterbolzen 5 abgestützt und mittels einer motorisch oder von Hand antreibbaren Welle 6 relativ zueinander zur Verstellung der Rückenlehne verstellbar sind. Hierfür bilden die Zahnscheiben, ähnlich einem Planetengetriebe, ein sogenanntes Ritzel 3 und ein sogenanntes Hohlrad 4 mit unterschiedlichen Zähnezahlen, sodass der Exzenterbolzen bei seiner Verdrehung durch die Welle 6 eine radial-achsiale Verstellung der Zahnscheiben 3 und 4 bewirkt. Selbstverständlich sind Ritzel 3 und Hohlrad 4 hierbei fest mit dem zugeordneten Blechprofil 1 resp. 2 verbunden.

Autositzverstellungen dieser Art sind ansich bekannt.

Erfindungswesentlich ist nun, dass die Zahnscheiben in einem Folgewerkzeug (nicht gezeigt) auf einer Feinschneidmaschine (nicht gezeigt) aus einem Materialstreifen in mindestens vier Arbeitsgängen herausgeschnitten werden. Dies betrifft sowohl das Ritzel als auch das Hohlrad.

Fig. 2 und 3 zeigen einen solchen Materialstreifen 7, aus dem eine Zahnscheibe, hier in Form des Ritzels 3 herausgeschnitten wird. Entsprechend ist ein nicht näher gezeigtes Folgewerkzeug zu verwenden, was in identischer Weise auch für die Herstellung eines Hohlrades 4 zutrifft.

In der Arbeitsfolge von rechts nach links in der Darstellung wird in einem ersten Arbeitsgang im Materialstreifen 7 ein Vorschnitt der Nabe resp. des Nabenloches 8 , ein Freischnitt 9 für einen nachfolgenden Material-Aufzug 10 sowie ein Vorschnitt oder ein Ausformen eines Sucher-Loches 11 resp. Sucher-Nockens durchgeführt.

Ein Ziehvorgang in der nächsten Arbeitsfolge führt zum Material-Aufzug 10, der gestattet, in einer weiteren Arbeitsfolge eine Materialverdickung im Bereich der Zahnbindung 12 und gegebenenfalls im Bereich der Nabe 13 durch ein Zurückverformen (dritter Schritt von rechts in der Zeichnung) zu ermöglichen.

Mit einer weiteren Arbeitsfolge oder aber zusammen mit der Zurückverformung im dritten Verfahrensschritt kann auch die Zahnkopfform um ca. 1/3 der Materialstreifen-Dicke auf den Kopfkreis- bzw. Fuskreiss-Durchmesser angedrückt werden, um beim nachfolgenden Feinschneiden einen minimalen Materialeinzug zu erhalten. Vorzugsweise wird dabei die Zahnform während des Material-Durchsatzes feingeschnitten und gleichzeitig die Nabendurchbrechung gestanzt.

Mit einem letzten Verfahrensschritt erfolgt dann das Ausschneiden der Zahnscheibe.

Vorzugsweise wird zur Vermeidung eines unerwünschten Materialflusses die Zahnscheibe sowohl beim Feinschneiden als auch beim Ausschneiden unterstützt, beispielsweise mittels Ringzacken (nicht gezeigt).

Selbstverständlich sind auch weitere Vor-und Nachbehandlungsschritte denkbar, wie etwa das Feinschneiden der effektiven Nabenbohrung, das Herausstanzen der Sucher-Nocken u. dgl.

Ohne weiteres ist es zudem möglich, durch Mehrfachwerkzeuge einen Materialstreifen zwei- oder mehrreihig feinzuschneiden.

Wesentlich ist, dass es durch die vorbeschriebene Erfindung gelingt, die Problemzone im Bereich der Zahnanbindung 12 bei solchen Zahnscheiben zu beseitigen, unter Wahrung aller Kriterien bezüglich Bauvolumen und wirtschaftlicher Herstellung.

## Patentansprüche

1. Verfahren zur Herstellung von Zahnscheiben (3,4) für eine Autositz-Verstellvorrichtung, bei dem die Zahnscheiben in einem Folgewerkzeug auf einer Feinschneidmaschine je aus einem Materialstreifen (7) in mehrzahligen Arbeitsfolgen herausgeschnitten werden,
dadurch gekennzeichnet, dass
mindestens im Bereich der Zahnanbindung (12) das Material ringförmig (10) aus der Ebene des Materialstreifens heraus aufgezogen (gedrückt) und dann nachfolgend zur Herstellung einer Materialverdickung mindestens im Bereich der Zahnanbindung wieder in die Ebene des Materialstreifens zurückverformt wird.

2. Verfahren nach Anspruch 1, dadurch gekennzeichnet, dass in einer ersten Arbeitsfolge ein Vorschnitt der Nabe (13) resp. Nabenbohrung, ein Freischnitt (9) im Materialstreifen für den nachfolgenden Material-Aufzug sowie ein Vorschnitt oder eine Ausformung eines Sucher-Loches (11) resp. Sucher-Nockens erfolgt.

3. Verfahren nach Anspruch 1, dadurch gekennzeichnet, dass das aufgezogene Material sowohl für die Zahnhöhe als auch für die Nabenhöhe zurückverformt wird.

4. Verfahren nach Anspruch 3, dadurch gekennzeichnet, dass während des Zurückverformens des Materials gleichzeitig die Zahnkopfform um mindestens 1/3 der Materialstreifendicke auf den Kopfkreis- bzw. Fusskreis-Durchmesser angedrückt wird, um beim Feinschneiden der Zahnform einen minimalen Einzug zu gewährleisten.

5. Verfahren nach Anspruch 1, dadurch gekennzeichnet, dass die Zahnform während des Werkstoff-Durchsatzes feingeschnitten und gleichzeitig die Nabenbohrung gestanzt wird.

6. Verfahren nach Anspruch 1, dadurch gekennzeichnet, dass sowohl beim Feinschneiden als auch beim Ausschneiden der Zahnscheiben eine, einen Materialfluss verhindernte Abstützung erfolgt.

## Claims

1. Method of making a toothed disc (3,4) for adjusting a vehicle seat wherein each toothed disc is blanked out from a strip of material (7) in a plurality of sequences of operations in a follow-on tool on a precision blanking machine,
characterised by stamping the material strip so that a portion of the material strip is displaced and formed in a first direction away from the material strip, said portion corresponding to at least one of addendum circle (12) and a hub of a toothed gear; forming said portion in a direction towards the material strip, whereby the material corresponding to at least one of the addendum circle and a hub of the toothed year is thickened.

2. The method as defined in claim 1 wherein in an initial sequence of operations, a first-step blanking of the gear ring hub (13) or bore of the hub, a free blanking (9) in the strip of material for the subsequent displacement of material as well as a first blanking or a forming-out of a selecting hole (11) or selecting cam results.

3. The method as defined in claim 1 wherein the drawn up material is formed back both for the depth of the tooth as well as for the thickness of the gearring hub.

4. The method as defined in claim 1 wherein the profile of the addendum is simultaneously pressed onto the diameter of the addendum or root circle by at least 1/3 of the thickness of the material strip during the forming-back of the material in order to guarantee a minimum of indentation of the tooth profile upon precision blanking.

5. The method as defined in claim 1 wherein the tooth profile is precision blanked and the gear ring hub is perforated simultaneously during the material throughput.

6. The method as defined in claim 1 wherein a support preventing a flow of material both upon precision blanking as well as punching out the toothed disc results.

## Revendications

1. Procédé pour la fabrication de disques dentés (3, 4) pour un dispositif de réglage de siège d'automobile, dans lequel les disques dentés sont découpés, par un outil progressif sur une machine de découpe de précision à partir d'une bande de matière (7) au cours de plusieurs séquences de travail, caractérisé en ce qu'au moins dans la zone de l'engrènement (12), la matière est embouti (comprimé) en formant des cercles (10) qui sont sortis du plan de la bande de matière pour revenir ensuite, dans le plan de la bande de matière, à la forme initiale pour la réalisation d'un épaississement de matière au moins dans la zone de l'engrènement.

2. Procédé selon la revendication 1, caractérisé en ce que dans une première séquence de travail, on effectue une prédécoupe du moyeu (13) respectivement de l'alésage de moyeu, d'un dégagement (9) dans la bande de matière pour la montée suivante de matière ainsi que la réalisation d'un trou de localisation (11) respectivement d'une came de localisation.

3. Procédé selon la revendication 1, caractérisé en ce que la matière, tiré vers le haut, revient à sa forme initiale autant pour la hauteur de la dent que pour la hauteur de moyeu.

4. Procédé selon la revendication 3, caractérisé en ce que pendant le retour à la forme initiale de la matière, la forme de tête de dent est comprimée d'au moins 1/3 de l'épaisseur de bande de matière sur le diamètre de tête respectivement de pied, pour garantir une rentrée minimale pendant le découpage de finition de la forme de dent.

5. Procédé selon la revendication 1, caractérisé en ce que la forme de dent est découpée avec précision pendant le fluage de matière et en ce qu'en même temps l'alésage de moyeu est découpé.

6. Procédé selon la revendication 1, caractérisé en ce qu'également pendant la découpe des disques dentés, il se produit un appui évitant l'écoulement de matière.
